(19) **Europäisches Patentamt**
**European Patent Office**
**Office européen des brevets**

(11) **EP 2 961 157 A1**

(12) **EUROPEAN PATENT APPLICATION**

(43) Date of publication:
**30.12.2015 Bulletin 2015/53**

(51) Int Cl.:
***H04N 5/913*** *(2006.01)*  ***H04N 9/31*** *(2006.01)*

(21) Application number: **14305972.3**

(22) Date of filing: **23.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Neumann, Christoph**
**35576 Cesson-Sévigné (FR)**

• **Baudry, Séverine**
**35576 Cesson-Sévigné (FR)**
• **De Vito, Mario**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Message inserting method in a rendering of a video content by a display device, reading method, devices and programs associated**

(57)    A method for inserting at least one message in a rendering of a video content by a display device is disclosed. The display device comprises a periodic light source and the method comprises obtaining one bit of the message and modulating a frequency of the periodic light source in view of the bit. A device for inserting at least one message is disclosed.

In another aspect, a method and a device for reading at least one message in a video content obtained by filming a display device wherein the display device comprises a periodic light source whose frequency is modulated in view of a bit of the message is further disclosed.

Figure 1

**Description**

**1. Domain of the Invention**

The proposed technique relates to the identification of unauthorized content. More specifically, the proposed technique relates to a method for inserting, in an original content, a digital mark which can then be retrieved in an unauthorized content produced from the original content. The proposed technique also relates to a method for detecting a digital mark from an unauthorized content.

**2. Prior Art Solutions**

Piracy is considered as being a burden in digital content production and distribution. Among solutions used by the pirates for obtaining copies of digital contents, the use of camcorders is popular. Indeed, this technique does not necessitate an important technical knowledge. Furthermore, this technique can be implemented by using small and discreet equipment. Thus, filming content (for example in a theatre or in front of an LCD screen) is a popular technique for obtaining a copy of a protected digital content.

Solutions for preventing piracy have been widely investigated.

Among these solutions, inserting a digital mark into one content is a well-known technique to prevent or trace piracy. Each copy of the original content will bear a different mark, linked for example to a user ID or an equipment ID, and retrieving the watermark on a pirated copy allows tracing back to the pirate. This is for example the case of watermarking. Invisible information is inserted in an original digital content (still picture or a video stream). This digital content may then be retrieved in a copy of the original content to find the initial defrauder.

Among existing solutions, directed to digital video contents, the following can be implemented:

- in the case of broadcast, insertion of a watermark by the set-top box; this allows tracking directly the user; however, this solution has to be supported by the broadcaster and is limited to the broadcaster that deploys the corresponding set-top boxes;
- in the case of streaming, the video on demand (VoD) server may also implement a watermarking insertion process. However, this is limited to the VoD services that support such insertion;
- in the case of rental or buying of physical support like DVD or Bluray (eg: BD+): the content which is recorded on the physical content must comprise watermarking information, and the watermark will be inserted at play time. However, this solution is limited to players which include a watermark «embedder»: this is not the case of all players.

We can notice that the proposed solutions have one major drawback: they are limited by the capacity or the willing of a content provider to implement a specific solution. Hence, there is currently no cross-medium universal solution. Current watermarking systems requires to either modify the video player or decoder (DVD/BluRay players, STB...), or to insert a watermark « embedder » module into the server chain. Thus, the watermarking is specific to a given content provider or service.

Another technique, described in patent US 7,756,288 B2 consists in inserting a watermark onto an illuminated image sequence in motion picture. This technique is based a light modulator which is configured for modulating a light source; and a controller which is configured for controlling the light modulator. The controller selectively alters light intensity over space and time such that a low frequency watermark is inserted onto the illuminated image sequence. However, the solution proposed in this patent is limited to a modulation of the intensity of the backlight, in a context of analogic displaying. Such intensity modulation presents the drawback of being noticeable to a user.

So there is a need for providing a universal solution for allowing insertion of watermark independently of the ability or willingness of a specific actor in the content distribution chain.

**3. Presentation of the invention**

The invention does not comprises theses drawbacks of prior art. More specifically, the invention relates to a method for inserting at least one message, in a rendering of a video content by a display device wherein the display device comprises a periodic light source (PLS). According to the invention, said method comprises at least one iteration of:

- obtaining one bit of said message;
- modulating a frequency of said periodic light source (PLS) in view of said bit.

Thus, the invention allows inserting a message in a rendering of a content which can then be retrieved. The invention allows inserting the message independently of the device used for playing the content. It is important to notice that the proposed technique does not insert the message in the content itself, but in the rendering of the content thanks to the light source modulation.

According to a specific feature, said modulating of a frequency of a periodic light source in view of said bit comprises applying a transformation function on the frequency of said light source according a value of said bit.

According to a specific feature, said transformation function is applied during a time period corresponding to the duration of said bit.

According to a specific feature, said given time period is comprised between one and twenty seconds.

According to a specific feature, the transformation function returns a first frequency for a first value of the bit and a second frequency value for a second value of said bit.

According to a specific feature, said transformation function is:

$$m(t) = \alpha(-1)^{w\left(\left\lfloor \frac{t}{T} \right\rfloor\right)}$$

With $w(i)$ being the $i^{th}$ message bit, $\alpha$ being an absolute shift in frequency, and T being the duration of one bit, $\lfloor \ \rfloor$ being the floor function.

According to another specific feature, the transformation function returns an increasing frequency during the time period for a first value of said bit and a decreasing frequency during the time period for a second value of said bit.

According to a specific feature, said transformation function is:

$$m(t) = \alpha(-1)^{w\left(\left\lfloor \frac{t}{T} \right\rfloor\right)}(t/T - \lfloor t/T \rfloor - \frac{1}{2})$$

With $w(i)$ being the $i^{th}$ message bit, $\alpha$ being an absolute shift in frequency, and T being the duration of one bit, $\lfloor \ \rfloor$ being the floor function.

According to a specific variant wherein the periodic light source is a pulse light source and the frequency is a pulse frequency, the pulse-width of said pulse light source is modulated such that the duty cycle of display device remains constant while modulating said pulse frequency.

In another embodiment, the invention is also directed to a device for inserting at least one message, in a rendering of a video content by a display device, wherein the display device comprises a periodic light source (PLS). Such device comprises:

- a selector for obtaining one bit of said message;
- a modulator for modulating a frequency of the periodic light source in view of said bit.

The invention also relates to a method for reading at least one message, in a video content obtained by filming a display device wherein the display device comprises a periodic light source (PLS) whose frequency is modulated in view of a bit ($w_i$) of said message (Msg).

According to the invention, said method comprises at least one iteration of:

- synchronizing, where the start of at least one message's bit is identified;
- detecting, which detects each bit of the message by identifying the flickering frequency corresponding to the value of each bit of the message.

Thus, the method allows retrieving the message which has been inserted during the rendering of the content by using the modulation of the frequency of the periodic light source (PLS). Advantageously, the message is then visible on a record of the content made with a camera.

In another embodiment, the invention is also directed to a device for reading at least one message, in a video content obtained by filming a display device wherein the display device comprises a periodic light source (PLS) whose frequency is modulated in view of a message bit ($w_i$).

According to the invention, said device comprises:

- a synchronizer where the start of at least one message's bit is identified;
- a detector which detects each bit of the message by identifying the flickering frequency corresponding to the value of each bit of the message.

In a preferred embodiment, the various steps of the methods according to the invention are implemented by one or more software or computer programs comprising software instructions for execution by a data processor or a module (such as a synchronizer, a detector), and adapted for controlling the execution of the different process steps.

Accordingly, the invention also provides a program which can be executed by a computer or a data processor, the program including instructions for controlling the execution of the steps of a method as mentioned above.

This program can use any programming language, and be in the form of source code, object code or intermediate code between source code and object code, such as a partially compiled form, or in any other desirable form.

The invention also provides a medium readable by a data processor, and containing instructions of a program as mentioned above.

The information carrier may be any entity or device capable of storing the program. For example, the medium may comprise a storage medium, such as a ROM, for example a CD ROM or a microelectronic circuit, or a magnetic recording medium, such as a diskette (floppy disk) or a hard drive.

On the other hand, the information carrier may be a transmissible carrier such as an electrical or optical signal which may be conveyed via electrical or optical cable, by radio or by other means. The program according to the invention may in particular be downloaded over a network such as the Internet.

Alternatively, the information carrier may be an integrated circuit in which the program is incorporated, the circuit being adapted to perform or to be used in carrying out the process in question.

According to one embodiment, the invention is implemented using software and / or hardware. In this context, the term "module" can correspond in this document as well as a software component to a hardware component or a set of hardware and software components.

A software component is one or more computer programs, one or more sub-programs of a program, or more generally to any element of a program or software capable to implement a function or set of functions, according to what is described below for the module. Such software component is executed by a processor of a physical entity (TV, projector, terminal, server, gateway, router, etc.) and is likely to access the hardware resources of the physical entity (memory, storage media, bus communication, e-cards I / O, user interfaces, etc.).

Similarly, a hardware component is any component of a hardware (or hardware) that can implement a function or set of functions, according to what is described below for the module. It may be a component integrated with programmable hardware or software for the execution processor, for example an integrated circuit, a smart card, a memory card, an electronic card for the execution of a firmware, etc.

Each component of the system described above provides its own software modules. The various embodiments described above can be combined together for the implementation of the invention.

**4. Drawings**

The proposed method is described in the following by way of examples in connection with the accompanying figures without limiting the scope of the protection as defined by the claim. In the figures:

- figure 1 illustrates the steps of the method for inserting a message;
- figure 2 illustrates the steps of the method for reading a message;
- figure 3 illustrates an embodiment of a device for inserting a message;
- figure 4 illustrates an embodiment of a device for reading a message;
- figure 5 illustrates a controlled flickering effect;
- figure 6 illustrate a constant duty cycle on two different frequencies.

**5. Detailed Description of the Invention**

5.1 Principles of the invention

The principle which forms the technical base of the technique is to take advantage of a difference between a recording frequency of a camcorder (i.e. the number of image which the camcorder is able to record by second, typically 25 or 30) and a lighting frequency (i.e. the number of time, by second, that the light source which is used for lighting the displayed image is switched on and switched off periodically). This difference is used for creating a signal comprising a message (which can be a watermark). In others words the proposed technique takes advantage of the "flickering effect" created by the fact of "camcording" a screen for injecting a message in the record obtained by the camcorder.

Thus, in a general manner, according to the proposed technique, when the lighting frequency is modulated (i.e. augmented or reduced), the signification of this modulation can then be interpreted (or recognized) in order to obtain the message. This means that the lighting frequency is changed in view of the message which is inserted (i.e. in view of the value of an identifier for example, if the message is an identifier). This modulation of the lighting frequency is interesting. For example, considering the case of a video camera (camcorder) which camcords (records with a camera) an LCD display, such LCD display, usually embed a backlight panel that serves as a light source (called backlight). The camcorder samples the video signal displayed on the LCD (typically at a rate of 25 fps, called *f_sample).* This sampling leads to aliasing and is visible in the camcorded video (i.e. the resulting record) as flickering.

For example, a backlight frequency of 180 Hz *(f_sig)* captured at 25 fps *(f_sample)* with a camcorder is aliased as 5Hz peak *(f_aliasing),* i.e. flickering has a frequency of 5hz (180 mod 25 = 5). More generally, if *f_sample < f_sig,* then *f_aliasing* is equal to *f_sig mod f_sample.* The base of the technique consists in modifying f_sig, thus modifying *f_aliasing* at the detection.

Thus, according to the proposed technique, a situation (i.e. the presence of the flickering in the camcoded record) is turned to be an advantage for the content producer: for example, it allows tracing an origin of a pirate copy of a given content.

Since the backlight frequency *(f_sig)* is modulated, this means that the flickering frequency *f_aliasing* is also modulated. As a result, the record obtained by the camcorder comprises a modulation of the flickering frequency, this modulation being the result of an identifier or a message to insert.

Of course, the proposed technique is not limited to LCD screens. It can also be implemented into other rendering devices, like projectors (e.g. LED or Laser projectors) and any other device which emits periodically a light using digital pulse or digital sinusoidal light emission. Thus a light source is called a "periodic light source (PLS)" because light is not emitted constantly: light is emitted with a given frequency in form of pulse or in a sinusoid.

The proposed technique comprises two different aspects: a method for inserting, in the signal, a message, based on the properties of the "flickering effect" and a method for obtaining a message from a record of the signal(which is for example suspected to be a pirated copy, but any other application can be implemented).

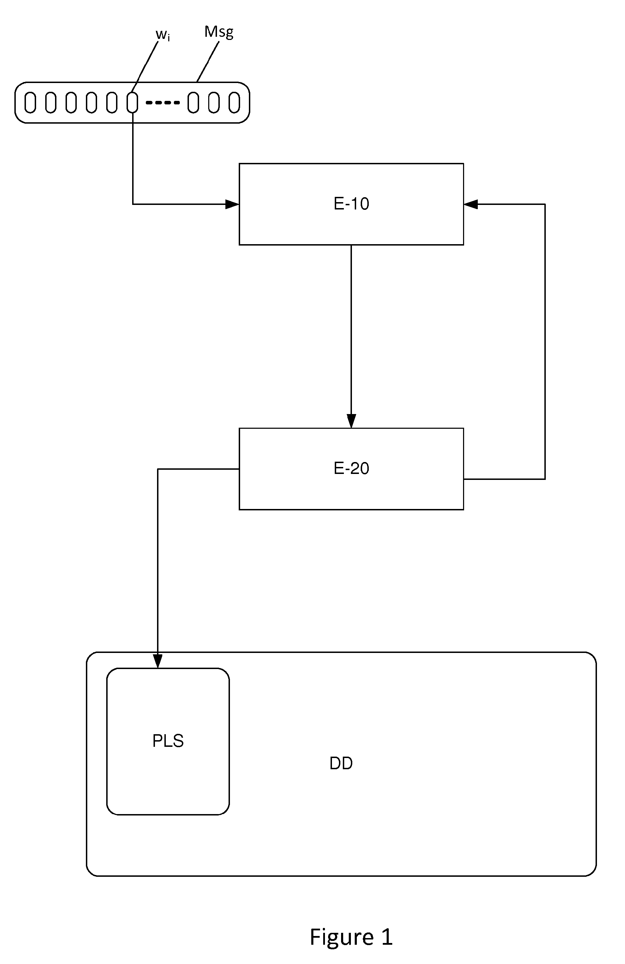

The method for inserting a message in a content rendered on a screen according to the proposed technique is described in relation with figure 1. The method for inserting at least one message (Msg), in a rendering of a video content by a display device (DD) wherein the display device comprises a periodic light source (PLS), comprises at least one iteration of the following steps:

- a step of obtaining (E-10) one bit ($w_i$) of said message (Msg); The bits are for example obtained sequentially; the message can comprise a given number of bytes, each byte being inserted by inserting the bit one after the other.
- a step of modulating (E-20) a frequency of said periodic light source (PLS) in view of said bit ($w_i$); this step can be implemented by applying a transformation function on the frequency of the periodic light source (PLS). The transformation function may affect the frequency to the up or down depending on the value of the bit.

Alternatively, instead of modulating in view of a single bit, the modulating can also be done in view of several bits. Furthermore, several embodiments of the modulation can be used for inserting the bit: for example a fixed frequency can be synonym of a value while a second frequency is synonym of a second value; another example can consist in increasing the frequency when a given value has to be inserted and consist in decreasing the frequency when another value has to be inserted: the increasing and decreasing is thus the information itself (independently of the value of the frequency).

Thus, each bit is inserted, one after the other, while the video is displayed on the screen. When the insertion of the message is finished, it can be resumed, starting from the beginning of the message, again and again as long as something is displayed on the screen. For an interesting result, in terms of investigation, each bit must be inserted during a time period which allows the detection of the bit. This time period can be for example comprised between one and twenty seconds. For a "normal" user, who is just watching the screen, nothing is visible since the intensity of the light is not modified.

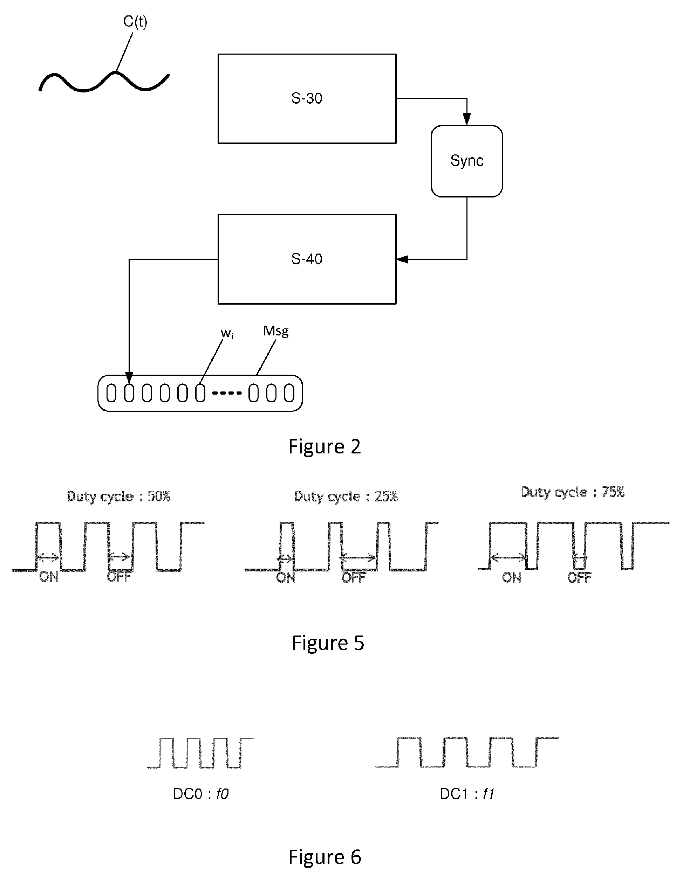

Thus the technique allows embedding a message in a rendering on a screen, for example on a LCD screen. The message can for example be embedded by modulating the frequency of the periodic light source. The pulse-width of the periodic light source may also be controlled in order to prevent any unwanted displaying effect. The duty cycle is the fraction of time the backlight is on and determines the display brightness of the screen: Duty cycle= t_ON/(t_ON + t_OFF). In LCD screens with constant periodic light source frequency, Pulse-Width-Modulation (PWM) is used to change the duty cycle by increasing/decreasing the duration of the light pulse, as explained with figure 5. In the present invention, the pulse-width of the periodic light source is modulated such that the duty cycle of the screen stays constant while modulating the pulse frequency. Figure 6 illustrate a constant duty cycle (50 %) with two different frequencies (f0 and f1). It is shown that the duty cycle is 50% and is constant, while the two frequencies are different. More specifically f0 is greater than f1 but the two duty cycles remain the same, thus the screen brightness stays constant.

Hence, the message may for example comprise a serial-number of the display device or any other identifier useful for anti-piracy investigations. If the video image is camcorded, the frequency modulations become visible as modulated flicker frequencies. These flickers are used to reconstruct the message.

In its preferred embodiment the message is coded by modulating the frequency of the light. In a refinement, the pulse-width is adapted such that the screen brightness stays constant (i.e. the duty cycle stays the same).

The method for reading a message inserted in content, according to the proposed technique is described in relation with figure 2. Basically, the method for reading the message consists in identifying the modulated frequencies in the camcorded video C(t), i.e. identifying the successive flickering frequencies in the camcorded video.

The method comprises:

- synchronizing (S-30), where the start of at least one message's bit is identified;
- detecting (S-40) each bit of the message by identifying the flickering frequency corresponding to the value of each bit of the message.

The method can also be completed by a step of assembly, where bits are added, according to a given assembly rule, for obtaining the message.

Such a two-step reading method is interesting because of the frame rate of the camera used for obtaining the message. Indeed considering the camcorded video, it is not known where the message is inserted. Thus, it is interesting to extract from a quite a long sample of the camcorded video, a given number of excerpts which are supposed to comprise bits. Advantageously, these excerpts can be of the same length that the time duration during which each bit of the message is inserted.

Thus, applied to investigation situation, given a camcorded video (in a form of an AVI file for example), identifying the user that camcorded video (in the context of piracy investigations) is easier. Ideally, each user should be linked to a different user ID. However, the use of an identifier of a TV or of a projector can also be used. Compared to state of the art solutions which consist in inserting a digital watermark into a video copy (with the digital watermark encoding the user ID) the proposed technique is simpler. In state of the art solution, the watermark is inserted in the digital video, either at server or at decoder / player side. This requires modifying specifically the server or player, thus the watermark system is not universal.

The invention proposes a universal marking system in which the message (which can comprise a mark) is inserted at the very end of the video display chain. The message is here superimposed on the video in its analogue form, not in the digital one: thus, there's no need to use expensive systems for generating insertion of digital watermarks during processing of the digital content before transmission to the displaying device. According to the proposed technique, the message is finally independent of the content itself: any content displayed with a device implementing the proposed technique will be marked. This makes a huge difference because the technique is independent of the platform, of the device which plays the content. It is not linked to the fact that the display device is connected to the internet or not. It does not require an identification of the user himself: when no identification of a user is available, any other identifier can be used: serial number of the device, hash of the serial number of the device, IP address (when the device is connected), etc.

Hence, the proposed technique allows obtaining a fine-grained identification of a camcord origin. It is possible to identify the end-device serial number. Message insertion is independent of the origin of the content (VoD, download, DVD/Blu-ray, broadcast). Thus, the same marking system can be used for several content owners or content providers. The technique may be coupled with content protection systems like HDCP. In HDCP, the video source (e.g. DVD or Blu-Ray player) sends the video in an encrypted format to the display. The decryption is performed at the very end of the chain, i.e. inside the display, to enable maximal protection. Inserting a watermark at the same point of the chain, i.e. just at the display time, enables to fully protect the video along the chain.

Finally, the proposed technique enables to implement at low cost a marking system directly inside a display, since frequency modulation can be achieved by adapting the firmware responsible of backlight control. Thus, the invention may be implemented very simply at a large scale by upgrading the firmware of existing displays devices. Moreover, it enables to implement a universal and permanent marking system, where the message «embedder» no longer needs to be customized depending on each customer requirements.

5.2 Description of an embodiment

In this embodiment, methods are described where the inserted message (Msg) is a watermark (WM). However, the nature of the message (the fact that the message is a watermark) does not change anything to the transformation functions which are applied. As already explained, the proposed technique comprises thus two aspects: a message inserting method, where a watermark is encoded by light source frequency modulation and a method where the message is read (the watermark is detected and decoded). In this embodiment, the inserting method is implemented in the case of an LCD screen.

5.2.1. Insertion of the message

Indeed, one technique for displaying content associates a LCD (flat panel display, electronic visual display, or video display) with one or several light sources, these light sources modulating properties of liquid crystals. Indeed, liquid crystals do not emit light directly. For example, backlights of LCD screens send light pulses with a given frequency, e.g. 180Hz. The backlight frequency is different from the frame rate (refresh rate) of the LCD screen. The latter is typically 60Hz.

The backlight is a PWM signal (Pulse-Width Modulation), i.e. it is a periodic rectangular signal with frequency f_sig, f_sig being typically of 180 Hz. Mathematically it is defined by the following equation:

$$rect_\theta\left(2\pi f_{\_sig}t\right)$$

With

$$rect_\theta(k + t) = \begin{cases} 0 \text{ if } \dfrac{-\theta}{2} < t \le \dfrac{\theta}{2} \\ 1 \text{ else} \end{cases}$$

For all k being an integer, and for all t such that $-0.5 < t \le 0.5$.

$\theta$ is called the duty cycle and is the fraction of time the backlight is on: Duty cycle = $t_{ON}/(t_{ON} + T_{OFF})$. Usually, backlight duty cycle varies between 50% and 100%.

Backlights either rely on LEDs or cold cathode fluorescent lamp (CCFL) inverters controlled by a controller. In function of the technology used, the speed of the PWM cycling backlights on and off depends on the backlight type used: with CCFL-based backlights nearly all cycling at 175Hz or 175 times per second. LED backlights have been reported running from 90Hz up to 420Hz, with those at the lower end flickering much more visibly. Of course, in this embodiment, the controller is able to accept a variable Pulse-Width-Modulation, controlled by another module, a module which implements the technique of the invention, and which takes in input an identifier (to include in the signal) and a modulation parameter. The modulation parameter is a frequency modulation parameter which allows modulating the frequency of the screen backlight. In a refinement, the modulation parameter further comprises a pulse-width modulation parameter. The pulse-width of the periodic light source is also modulated such that the duty cycle of the screen stays constant while modulating the pulse frequency. Advantageously, the screen intensity remains constant (the duty cycle is constant).

The identifier can be serial-number of the projector, of the TV or any other unique identifier useful for anti-piracy forensics.

In a first variant, the serial number of the display is encoded using frequency modulation: that is the frequency of the backlight is changed according to a serial number signal:

$$s(t) = rect_\theta\left(2\pi\left(f_{\_sig} + m(t)\right)t\right)$$

With *m(t)* being a signal generated from the display serial number (the serial number signal), and *f_sig* being the usual backlight frequency (for example 180 Hz), and *s(t)* being the modulated backlight signal, and *"rect"* function being the usual rectangular function. $\theta$ (the duty cycle) stays constant, which implies that the pulse-width is modulated accordingly.

In a first sub variant, the signal *m(t)* is generated such that two different frequencies are used to encode bits 0 and 1. More precisely, *m(t)* can be defined by this transformation function:

$$m(t) = \alpha(-1)^{w\left(\left\lfloor\frac{t}{T}\right\rfloor\right)}$$

With *w(i)* being the $i^{th}$ watermark bit (serial number or the like), $\alpha$ being the absolute shift in frequency ($\alpha$ is small compared to *f_sig*), and T being the duration of one watermark bit. $\llcorner$ $\lrcorner$ is the floor function, i.e. $\lfloor x \rfloor$ is the largest integer smaller or equal to the real number x.

Typically, T should be a few second long to allow for a correct estimation of the backlight frequency (between 1 and 20 second for example). This means that a bit of the chosen identifier will be inserted during a duration T between 1 and 20 seconds.

$\alpha$ is chosen small compared to *f_sig* so as not to impair the viewing experience. $\alpha$ is also chosen such that $f_0=(f\_sig-\alpha)\ mod[f\_sample]$ and $f_1=(f\_sig+\alpha)\ mod[f\_sample]$ are different, where *f_sample* is the camcorder frame rate (25, *30 fps, etc.*). This is the case when $\alpha$ is much smaller than the camcorder typical sampling frequency f_sample, which is the case in practice because for practical reason the backlight frequency cannot be changed too much.

More specifically, since the device which implements the proposed technique is not able to know which camcording device is used, a median value is chosen for $\alpha$ where the resulting frequencies ($f_0$ and $f_1$) fits for a given numbers of values for *f_sample (24, 25, 30, 60 fps, etc)*. The calculation of $\alpha$ is made by the device in view of the the usual backlight frequency *f_sig.* For example, the value of $\alpha$ is 6.

Thus, when a video is camcorded on the display device, the video spectrum of the record will show two peaks (at different moments): one at $f_0=(f\_sig-\alpha)\ mod[f\_sample]$ and the other at $f_1=(f\_sig+\alpha)\ mod[f\_sample]$.

Of course, this is an embodiment for coding the information. It is understood that any other way to code the identifier by modulating the frequency may suit. However, this embodiment has the advantage of being simple to implement.

In a second variant, the frequency is modulated using chirp for Binary Orthogonal Keying (BOK). More specifically:

- '1' is coded by an up-chirp, i.e. by increasing the frequency of the backlight.
- '0' is coded by a down-chirp, i.e. by decreasing the frequency of the backlight

In other words, the modulating signal *m(t)* is given by transformation function:

$$m(t) = \alpha(-1)^{w\left(\left\lfloor \frac{t}{T} \right\rfloor\right)}(t/T - \lfloor t/T \rfloor - \frac{1}{2})$$

In this variant $\alpha$ is chosen such that $\alpha$ is small compared to typical camcorder frame rate. For instance, we can set $\alpha$ =2Hz.

### 5.2.2. Reading the message

According to the proposed technique; a process has to be implemented for reading the previously inserted message. In this embodiment, it is done by detecting and decoding the watermark which was introduced in the record. Hence, to retrieve the display watermark on the camcorded video *I(x,y,t)* three steps are implemented: a preprocessing step to convert the video signal into a suitable signal for watermark detection , a synchronization step where the start of each watermark bit is identified, and a detection step which detects the value of each bit of the watermark.

The preprocessing step convert the video I(x,y,t) into a 1-dimensional signal c(t). for instance, c(t) is obtained by computing, for the image at time t of the video, the average of the luminance of the middle line. Alternatively, c(t) can be the average of the whole image at time t of the video. c(t) is computed for the whole video length.

The implementation of the synchronization and detection steps depends on the variant used to embed on bit in the backlight signal.

In the first embodiment where the bit is embedded by selecting either frequency f0 or frequency f1, the two steps can be implemented as follows:

    1. The synchronisation step, where the start of at least one message's bit is identified, comprises the following steps:

        a. extracting n excerpts $e_i(t)$ from *c(t),* each one of length *T* and each one shift from the other by one frame: $e_i(t) = e[i,i+T]$; *n* corresponds for example to the length of an expected message
        b. computing the *n* FFT's $E_i$ from excerpts $e_i$
        c. extracting for each $e_i$ the amplitude of the two peaks at $f_0$ and $f_1$ (i.e. at expected frequencies $f_0$ and $f_1$, in view for example of the frame rate of the record).
        d. selecting the excerpt *j* maximizing the calculation $/E_j(f0)-E_j(f_1)/$: j is then the start of one watermark bit.

    2. The detection step, which detects each bit of the message by identifying the flickering frequency corresponding to the value of each bit of the message, comprises the following steps:

a. computing the FFT $E_k()$ of excerpts *e[j+kT; j+kT+T]* for all *k, k being comprised between 0 and n-1;*
b. If $E_k(f0) > E_k(f1)$, the watermark bit is equal to *0*; else the watermark bit is equal to *1*.

In the second embodiment using binary orthogonal keying (BOK) for inserting the message, the two steps can be implemented as follows:

  1. The synchronization step, where the start of at least one message's bit is identified, comprises the following steps:

  a. extracting n excerpts $e_i(t)$ from *c(t),* each one of length *T* and each one shift from the other by one frame : $e_i(t) = e[i,i+T]$

  b. for each excerpts $e_i$, compute the $\phi$ intercorrelations $C^0(i;\phi)$ of $e_i$ with the chirp signals $v_\phi^0$, where $\phi$ is an integer ranging from 0 to m. Similarly, compute the $\phi$ intercorrelactions $C^1(i; \phi)$ of $e_i$ with the chirp signals $v_\phi^1$

  c. select the maximum of $C^j(i; \phi)$ for all i ranging from 0 to n, $\phi$ ranging from 0 to m, and j ranging from 0 to 1 : the values of i and $\phi$ giving the maximum value of $C^j(I;k)$ are noted $i_M$, $\phi_M$.

  2. The detection step, which detects each bit of the message by identifying the flickering frequency corresponding to the value of each bit of the message, comprises the following steps:

  a. splitting the camcorded signal c(t) in excerpts $e[i_M+kT; i_M+kT+T]$.

  b. computing the correlation value C0 between $e[i_M+kT; i_M+kT+T]$ and $v_{\varphi_M}^0$, and the correlation value C1 between $e[i_M+kT; i_M+kT+T]$ and $v_{\varphi_M}^1$

  c. If C0>C1 watermark bit is equal to 0, else watermark bit is equal to 1.

In this embodiment, the chirp signals are defined as:

$$v_\varphi^0(t) = sin\left(2\pi\left(f_{\_sig} + \alpha\left(\frac{t}{T} - \left\lfloor\frac{t}{T}\right\rfloor - \frac{1}{2}\right)t\right)t + 2\pi\varphi/m\right)$$

$$v_\varphi^1(t) = sin\left(2\pi\left(f_{\_sig} - \alpha\left(\frac{t}{T} - \left\lfloor\frac{t}{T}\right\rfloor - \frac{1}{2}\right)t\right)t + 2\pi\varphi/m\right)$$

And m is an integer defining the phase precision. Typically m is about 10.

5.3 Complementary embodiment

One component of the system is the generation of the messages for each display device. If the length of the message is N, it is not possible to use all the $2^N$ possible messages, since some messages would be the cyclic shift of others, and won't be distinguishable at the detection time.
A solution is to generate randomly a set of messages, and check that there are no equivalent messages up to a cyclic shift. Another solution is to prefix a synchronization message before the user message. The synchronization message allows identifying the start of the user watermark at the detection time (for instance by using a 8b/10b coding to generate code words as well as synchronization words).

5.4 Devices

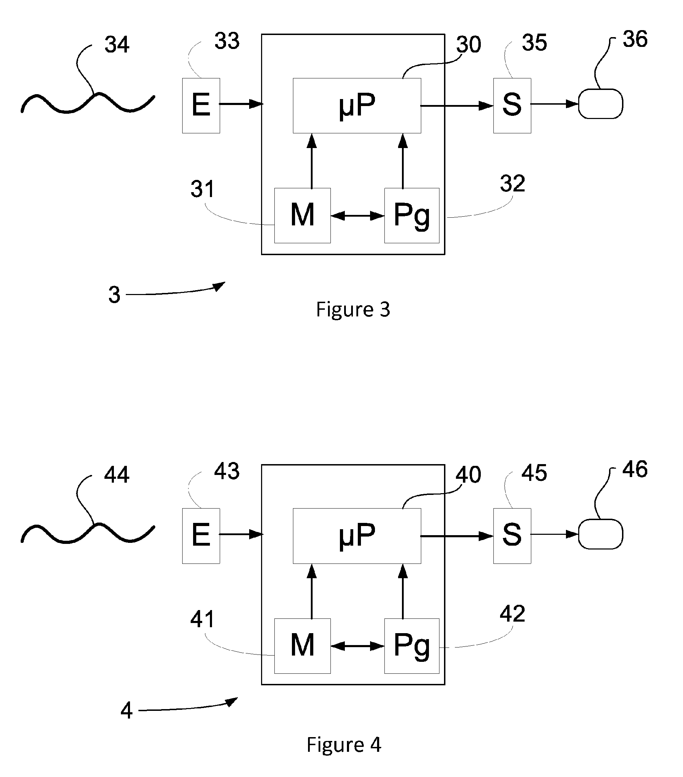

The structure of a device for the execution of the method of insertion of a message is illustrated schematically in figure 3. The device 3 comprises a memory M 31, and a processing unit 30 equipped with a microprocessor LP, that is driven by a computer program (or application) Pg 32. At input, the processing unit 30 receives the signal 34 of the periodic light source through an input interface module E 33. The microprocessor µP processes signal 34 according to the instructions of the program Pg 32, to modulate the frequency 36, (according to the content of the current bit of the message) which will be transmitted through an interface module S 35. The apparatus can be included in any device which comprises a periodic light source for displaying contents. It can be implemented as a specific chip or integrated in a preexistent chip.

The structure of a device for the execution of the method of reading a message is illustrated schematically in figure 4. The device 4 comprises a memory M 41, and a processing unit 40 equipped with a microprocessor ΓP, that is driven by a computer program (or application) Pg 42. At input, the processing unit 40 receives the signal 44 of a content which has been filmed by a camera through an input interface module E 43. The microprocessor μP processes signal 44 according to the instructions of the program Pg 42, to obtain the message 46 inserted in the camcord (according to the variation of the frequency of the flickering effect) which will be transmitted through an interface module S 45. The apparatus can be included in any device which is used for investigation process. It can be implemented as a specific chip or integrated in a preexistent chip.

**Claims**

1. A method for inserting at least one message (Msg), in a rendering of a video content by a display device (DD) wherein the display device comprises a periodic light source (PLS), said method being **characterized in that** it comprises at least one iteration of:

   - obtaining (E-10) one bit ($w_i$) of said message (Msg);
   - modulating (E-20) a frequency (f_sig) of said periodic light source (PLS) in view of said bit ($w_i$).

2. The method according to claim 1, **characterized in that** said modulating (E-20) of a frequency of said periodic light source (PLS) in view of said bit ($w_i$) comprises applying a transformation function on said frequency (f_sig) of said periodic light source (PLS) according a value of said bit ($w_i$).

3. The method according to claim 2, **characterized in that** said transformation function is applied during a time period *(T)* corresponding to the duration of said bit ($w_i$).

4. The method according to claim 3, **characterized in that** said time period *(T)* is comprised between one and twenty seconds.

5. The method according to claim 3, **characterized in that** said transformation function returns a first frequency for a first value of said bit ($w_i$) and a second frequency value for a second value of said bit ($w_i$).

6. The method according to claim 5, **characterized in that** said transformation function is:

$$m(t) = \alpha(-1)^{w\left(\left\lfloor \frac{t}{T} \right\rfloor\right)}$$

   With *w(i)* being a *$i^{th}$* bit of said message, $\alpha$ being an absolute shift in frequency, and T being said time period, ⌊ ⌋ being the floor function.

7. The method, according to claim 3, **characterized in that** said transformation function returns an increasing frequency during said time period for a first value of said bit ($w_i$) and a decreasing frequency during said time period for a second value of said bit ($w_i$).

8. The method, according to claim 7, **characterized in that** said transformation function is:

$$m(t) = \alpha(-1)^{w\left(\left\lfloor \frac{t}{T} \right\rfloor\right)}(t/T - \lfloor t/T \rfloor - \frac{1}{2})$$

   With *w(i)* being a *$i^{th}$* bit of said message, $\alpha$ being an absolute shift in frequency, and T being the time period, ⌊ ⌋ being the floor function.

9. The method, according to claim 2 wherein said periodic light source is a pulse light source and said frequency is a pulse frequency, **characterized in that** a pulse-width of said pulse light source is modulated such that the duty cycle of display device remains constant while modulating said pulse frequency.

10. A device (3) for inserting at least one message (Msg), in a rendering of a video content by a display device (DD) wherein the display device comprises a periodic light source (PLS), said device being **characterized in that** it comprises:

   - a selector for obtaining one bit ($w_i$) of said message (Msg);
   - a modulator for modulating a frequency of said periodic light source in view of said bit ($w_i$).

11. Computer program product downloadable from a communications network and/or stored in a computer-readable carrier and/or executable by a microprocessor, **characterized in that** it comprises program code instructions for the execution of the method according to at least one of the claims 1 to 9, when it is executed on a computer.

12. A method for reading at least one message (Msg), in a video content obtained by filming a display device (DD) wherein the display device comprises a periodic light source (PLS) whose frequency is modulated in view of a bit ($w_i$) of said message (Msg), said method being **characterized in that** it comprises at least one iteration of:

   - synchronizing (S-30), where the start of at least one message's bit is identified;
   - detecting (S-40) each bit of the message by identifying the flickering frequency corresponding to the value of each bit of the message.

13. A device for reading at least one message (Msg), in a video content previously obtained by filming a display device (DD) wherein the display device comprises a periodic light source (PLS), said device being **characterized in that** it comprises:

   - a synchronizer, where the start of at least one message's bit is identified;
   - a detector which detects each bit of the message by identifying the flickering frequency corresponding to the value of each bit of the message.

14. Computer program product downloadable from a communications network and/or stored in a computer-readable carrier and/or executable by a microprocessor, **characterized in that** it comprises program code instructions for the execution of the method according to claim 12, when it is executed on a computer.

Figure 1

C(t)

S-30

Sync

S-40

w$_i$    Msg

$\bigcirc\bigcirc\bigcirc\bigcirc\bigcirc\bigcirc$ ---- $\bigcirc\bigcirc\bigcirc$

Figure 2

Duty cycle : 50%    Duty cycle : 25%    Duty cycle : 75%

ON    OFF    ON    OFF    ON    OFF

Figure 5

DC0 : *f0*    DC1 : *f1*

Figure 6

34

33

30

35

36

E → μP → S → ⬭

31

M ↔ Pg

32

3 →

Figure 3

44

43

40

45

46

E → μP → S → ⬭

41

M ↔ Pg

42

4 →

Figure 4

Europäisches
Patentamt

European
Patent Office

Office européen
des brevets

**EUROPEAN SEARCH REPORT**

Application Number

EP 14 30 5972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/247120 A1 (YU HONG HEATHER [US] ET AL) 9 December 2004 (2004-12-09) | 1,10-14 | INV. H04N5/913 H04N9/31 |
| Y | * the whole document * | 1,10,11 | |
| A | | 2-9 | |
| | ----- | | |
| X | EP 1 237 369 A2 (EASTMAN KODAK CO [US]) 4 September 2002 (2002-09-04) | 1,10,11 | |
| Y | * the whole document * | 1,10,11 | |
| A | | 2-9, 12-14 | |
| | ----- | | |
| X | US 6 950 532 B1 (SCHUMANN ROBERT WILHELM [US] ET AL) 27 September 2005 (2005-09-27) | 1,10,11 | |
| Y | * the whole document * | 1,10,11 | |
| A | | 2-9,12, 14 | |
| | ----- | | |
| Y | EP 1 301 034 A2 (SONY CORP [JP]) 9 April 2003 (2003-04-09) | 1,10,11 | |
| A | * the whole document * | 2-9, 12-14 | |
| | ----- | | |

TECHNICAL FIELDS
SEARCHED      (IPC)

H04N

The present search report has been drawn up for all claims

| Place of search | Date of completion of the search | Examiner |
|---|---|---|
| Munich | 28 August 2014 | Weber-Kluz, Florence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 14 30 5972

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2014

| Patent document cited in search report | | Publication date | Patent family member(s) | | Publication date |
|---|---|---|---|---|---|
| US 2004247120 | A1 | 09-12-2004 | US 2004247120 A1 | | 09-12-2004 |
| | | | WO 2004109662 A2 | | 16-12-2004 |
| EP 1237369 | A2 | 04-09-2002 | CA 2368396 A1 | | 28-08-2002 |
| | | | EP 1237369 A2 | | 04-09-2002 |
| | | | JP 2002314938 A | | 25-10-2002 |
| | | | US 2002168069 A1 | | 14-11-2002 |
| US 6950532 | B1 | 27-09-2005 | US 6950532 B1 | | 27-09-2005 |
| | | | US 2005254683 A1 | | 17-11-2005 |
| | | | US 2007180254 A1 | | 02-08-2007 |
| EP 1301034 | A2 | 09-04-2003 | EP 1301034 A2 | | 09-04-2003 |
| | | | JP 3674568 B2 | | 20-07-2005 |
| | | | JP 2003110967 A | | 11-04-2003 |
| | | | US 2003063361 A1 | | 03-04-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7756288 B2